(19) Europäisches Patentamt
European Patent Office
Office européen des brevets

(11) Veröffentlichungsnummer : **0 050 810**
**B1**

(12) # EUROPÄISCHE PATENTSCHRIFT

(45) Veröffentlichungstag der Patentschrift : **30.01.85**

(21) Anmeldenummer : **81108412.8**

(22) Anmeldetag : **16.10.81**

(51) Int. Cl.⁴ : **C 08 G 71/04**, C 08 G 63/64, C 08 G 63/66, C 08 G 63/68, C 08 G 69/18, C 08 G 69/44, C 09 D 3/72, C 09 J 3/16

(54) **Copolymerisate aus aliphatischen Polycarbonaten und Lactamen.**

(30) Priorität : **29.10.80 DE 3040613**

(43) Veröffentlichungstag der Anmeldung : **05.05.82 Patentblatt 82/18**

(45) Bekanntmachung des Hinweises auf die Patenterteilung : **30.01.85 Patentblatt 85/05**

(84) Benannte Vertragsstaaten : **DE FR GB IT**

(56) Entgegenhaltungen :
**GB-A- 1 112 943**
**US-A- 3 228 759**
**Methoden der organischen Chemie, (Houben-Weyl), Band XI/2, 1958, Seiten 566-567**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Krimm, Heinrich, Dr.**
**Heyenbaumstrasse 65**
**D-4150 Krefeld (DE)**
Erfinder : **Buysch, Hans-Josef, Dr.**
**Brandenburger Strasse 28**
**D-4150 Krefeld (DE)**
Erfinder : **Botta, Artur, Dr.**
**Buschstrasse 149**
**D-4150 Krefeld (DE)**

**EP 0 050 810 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Description**

Die Erfindung betrifft neuartige Copolymerisate aus aliphatischen Polycarbonaten und Lactamen und ein Verfahren zu deren Herstellung.

Lactame lassen sich nach bekannter Technik in Gegenwart alkalischer Katalysatoren anionisch polymerisieren. Hierbei wird der Lactamring über die Zwischenstufe eines Metallactamats geöffnet und ein Linearpolymerisat mit Amidgruppen gebildet.

Polycarbonate hingegen sind solchen Lactampolymerisation bewirkenden Katalysatoren gegenüber völlig indifferent. Deshalb sollte beim Versuch, ein Gemisch aus einem Lactam und einem aliphatischen Polycarbonat mit metallischem Natrium zu behandeln, lediglich eine Lactampolymerisation erwartet und somit ein Amid- und Carbonatgruppen aufweisendes Reaktionsprodukt erhalten werden. Dessen Eigenschaftsbild sollte in Abhängigkeit von der Zusammensetzung der Ausgangsstoffe mehr oder weniger von den Eigenschaften reiner Polyamide und Polycarbonate bestimmt werden.

Aus der GB-A 1 112 943 ist ein Verfahren zur Herstellung von Formkörpern aus Poly-ε-caprolactam bekannt, die aufgrund ihres Herstellungsverfahrens nach der Formgebung innerhalb einer Zeitspanne von etwa, 1,5 Minuten bis zu einer Stunde bei 15-35 °C einer weiteren Formgebung unterworfen werden können. Die Poly-ε-caprolactamherstellung erfolgt durch Polymerisation des ε-Caprolactams in Gegenwart eines anionischen Katalysators, z. B. Natriumhydrid, und in Gegenwart von bis zu 3 Gew.-% eines Aktivators (Cokatalysators), z. B. eines aromatischen Polycarbonats auf Basis Bisphenol A bei mindestens 160 °C, jedoch unterhalb des Schmelzpunktes des Polymeren, bis zum Erreichen eines Kautschukmoduls zwischen 0,28 und 28,1 kg/cm$^2$. Das erfindungsgemäße Verfahren ist der vorgenannten Schrift weder zu entnehmen noch wird es durch diese nahegelegt, denn aromatische Polycarbonate bilden mit Caprolactam unter den Polymerisationsbedingungen des Caprolactams niedermolekulare N-substituierte Hydroxyaryloxycarbonyl-lactame, die keine Polymerisationstendenz zeigen.

Überraschenderweise wurde gefunden, daß das nicht der Fall ist. Man erhält nämlich bei der Copolymerisation äquimolarer Mengen von Lactamen und Polycarbonaten (hierbei bezieht sich Äquimolarität auf die Struktureinheit) Reaktionsprodukte mit Eigenschaften, die von den Eigenschaften von Polyamiden und Polycarbonaten nicht hergeleitet werden können.

Spektroskopisch läßt sich nachweisen, daß sowohl die Amidgruppen als auch die Carbonatgruppen verschwunden sind und stattdessen die für Urethangruppen und Carbonsäureestergruppen typischen Banden auftreten. Daraus muß geschlossen werden, daß die alkalische Copolymerisation von Lactamen und Polycarbonaten einen neuen Reaktionstyp einer alternierenden Copolymerisation nach folgenden Schema darstellt:

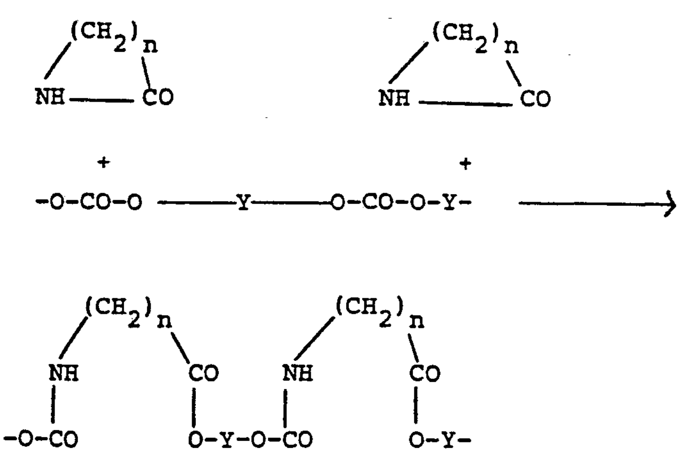

wobei R, Y und n die nachstehende Bedeutung aufweisen.

Der Aminocarbonsäurerest schiebt sich zwischen die Carbonylgruppe und den Estersauerstoff der Carbonatgruppe.

Wie sehr die Eigenschaften der Homopolymeren der Ausgangsstoffe in den neuen Copolymerisaten verändert werden, mag beispielhaft am Reaktionsprodukt aus Caprolactam und dem Polycarbonat aus Cyclohexandimethanol erläutert werden. Das Copolymerisat ist farblos, transparent, gummielastisch und zäh, während das Polycarbonat aus Cyclohexandimethanol zwar ebenfalls transparent und farblos, aber hart und steif, also keineswegs gummielastisch und das Polyamid weiß, opak und zäh ist und einen scharfen Schmelzpunkt hat. Unterschiedlich sind auch die Löslichkeiten in Lösungsmitteln. Das Polycarbonat löst sich glatt in gängigen Lösungsmitteln wie Methylenchlorid, Aceton, Essigester und Toluol, das neue Copolymere nur in wenigen polaren Lösungsmitteln wie Dioxan, Dimethylformamid und Cyclohexanon.

Gegenstand der Erfindung sind also anionische Copolymerisate aus Lactamen und Polycarbonaten mit Urethan- und Carbonsäureestergruppen, ein Verfahren zu deren Herstellung, dadurch gekennzeichnet, daß man wasserfreie Gemische aus Lactamen und aliphatischen Polycarbonaten in Gegenwart alkalischer Katalysatoren erhitzt, sowie ihre Verwendung als Kunststoffe, Klebstoffe, Weichmacher und Lacke.

Geeignete Lactame entsprechen der Formel

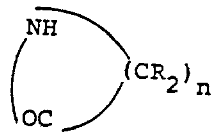

worin

R Wasserstoff oder $C_1$-$C_4$-Alkyl und

n eine ganze Zahl von 2 bis 13

bedeuten, insbesondere 4,4-Dimethyl-acetidinon-2, 2-Pyrrolidon, 2-Piperidon, ε-Caprolactam, 4-tert.-Butylcaprolactam, Capryllactam und Laurinlactam. Bevorzugt sind ε-Caprolactam, Laurinlactam und 2-Pyrrolidon.

Geeignete aliphatische Polycarbonate sind z. B. solche, die aus Alkoholen der Formel

HO—X—OH

worin X einen gegebenenfalls durch $C_1$-$C_4$-Alkyl substituierten, gegebenenfalls durch ein bis drei Sauerstoffatome unterbrochenen, offenkettigen cyclischen oder gemischt offenkettig-cyclischen Alkylenrest mit 2 bis 12 Kohlenstoffatomen bedeutet, aus Polyethylenglykolen mit Molekulargewichten bis zu 10 000 oder aus Oxalkylierungsprodukten von bifunktionellen Phenolen erhalten werden, insbesondere aus Trimethylenglykol, Neopentylglykol, Butandiol-1,3, Butandiol-1,4, Pentandiol-1,5, Hexandiol-1,6, Octandiol-1,8, Decandiol-1,10, Dodecandiol-1,12, 2,2,4,4-Tetramethylcyclobutandiol-1,3, Cyclohexandiolen, Cyclohexandimethanol, 2,2-Bis-(4-hydroxycyclohexyl)-propan, Diethylenglykol, Triethylenglykol, Polyethylenglykolen mit Molekulargewichten bis zu 5 000 und Bis-oxethyl-hydrochinon und Bis-oxethylbisphenol A.

Die Molekulargewichte der eingesetzten Polycarbonate liegen im Bereich zwischen 1 000 und 500 000, vorzugsweise zwischen 1 000 und 50 000.

Die Copolymerisationskomponenten können in beliebigem Mengenverhältnis eingesetzt werden, da die über das stöchiometrische Verhältnis überschüssige Komponente hochmolekular oder selbst polymerisationsfähig ist. Es ist so leicht möglich, die Produkteigenschaften in weiten Grenzen zu variieren, indem in Abhängigkeit vom Überschuß an einen oder anderen Bestandteil die Produkteigenschaften sich mehr dem Eigenschaftsbild des jeweiligen Homopolymerisats annähern lassen.

Insbesondere werden Mischungen copolymerisiert, die aus 10-90 Gewichtsprozent Lactam und 90-10 Gewichtsprozent Polycarbonat, vorzugsweise 20-80 Gewichtsprozent Lactam und 80-20 Gewichtsprozent Polycarbonat bestehen.

In Abhängigkeit vom Mengenverhältnis der Reaktionspartner können die Copolymerisate zusätzlich Carbonamid- und Carbonatgruppen aufweisen, die spektroskopisch nachweisbar sind.

Im allgemeinen wird die Reaktion in der Schmelze der Reaktionspartner durchgeführt ; es kann aber auch in Lösung polymerisiert werden, wobei als Lösungsmittel aprotische Lösungsmittel wie aromatische Kohlenwasserstoffe, Ether und dergleichen in Frage kommen.

Die im Verfahren der Erfindung erreichbaren mittleren Molekulargewichte hängen wesentlich von den Molekulargewichten der einzeusetzenden Polycarbonate ab, d. h. je höhermolekular das Polycarbonat ist, desto höher wird das Molekulargewicht des Copolymeren liegen. Somit ist eine weitere Möglichkeit gegeben, die Eigenschaften der Verfahrensprodukte abzuwandeln. Die erreichbaren Molekulargewichte liegen zwischen 1 000 und 150 000, vorzugsweise zwischen 1 000 und 50 000. Alle Molekulargewichte sind durch Lichtstreuungsmessung ermittelte Gewichtsmittel.

Für das Verfahren geeignete Katalysatoren sind z. B. Alkali-Verbindungen wie Lithium-, Natrium-, Kaliummetalle, -oxide -hydroxide, -carbonate, -alkoholate, -lactamate und die Alkalisalze schwacher Säuren wie der Blausäure und von Carbonsäuren.

Die Katalysatoren werden zweckmäßig in Mengen von 0,001-1 Gewichts-%, vorzugsweise von 0,01-0,2 Gewichts-% bezogen auf die Gesamtmenge der Reaktionspartner eingesetzt.

Eine im Interesse einer guten Verteilung des Katalysators bevorzugte Anwendungsweise besteht darin, den Katalysator in Form von Alkalimetall in einem Teil des Lactams zu lösen und die homogene Lactamatlösung zur Schmelze der übrigen Komponenten zuzugeben.

Die Polymerisationstemperaturen liegen bei 100-250 °C, vorzugsweise bei 120-180 °C.

Die neuen Copolymeren können in vielfältiger Weise technisch genutzt werden. Sie dienen als in weiten Grenzen modifizierbare Kunststoffe, Klebstoffe, Weichmacher und Lacke.

## Beispiel 1

5,65 g (0,05 Mol) Caprolactam und 11,4 g (0,05 Mol der Struktureinheit) Polycarbonat aus 1,4-Cyclohexandimethanol (Molgew. 12 000) werden bei 175 °C gehalten, bis eine homogene Schmelze erreicht ist. Man gibt 2 mg Natrium, gelöst in 200 mg des einzusetzenden Caprolactams zu und beobachtet nach 15 Minuten ein Steifwerden der Schmelze. Man erhält eine bei Raumtemperatur transparente, zähe Masse. Sie ist klarlöslich in Dioxan, Dimethylformamid und Cyclohexanon und hat ein Molekulargewicht von 18 500.

Beispiel 2

11,3 g (0,1 Mol) Caprolactam und 14,4 g (0,1 Mol der Struktureinheit) Hexamethylenpolycarbonat (Molgew. 35 000) werden durch Rühren bei 200 °C homogenisiert. Man versetzt mit einer Lösung von 3 mg Natrium in 1 g Caprolactam und hält 2 h bei 160 °C. Man erhält eine bei Raumtemperatur stark klebende, transparente, zähe Masse. Sie ist klarlöslich in Methylenchlorid, Benzol und Aceton und hat ein Molekulargewicht von 23 000.

Beispiel 3

11,3 g (0,1 Mol) Caprolactam und 34,2 g (0,1 Mol der Struktureinheit) Polycarbonat aus 2,2-Bis-(4(2-hydroxyethoxy)-phenyl)-propan (Bisoxethylbisphenol A) vom Molekulargewicht 16 500 werden aufgeschmolzen und homogenisiert. Man setzt 4 mg Natrium, gelöst in einer kleinen Teilmenge des einzusetzenden Caprolactams, zu und erhitzt 2 h auf 160 °C. Man beobachtet eine beträchtliche Zunahme der Viskosität. Man erhält ein farbloses, transparentes, hartes und zähes Copolymerisat, das sich in der Wärme zu Fäden von großer Festigkeit verstrecken läßt. Es löst sich in Methylenchlorid und Dioxan, ist aber unlöslich in Toluol, worin sich das Polycarbonat glatt löst. Das Molekulargewicht beträgt 19 000.

Beispiel 4

16,9 g (0,1 Mol) 4-tert. Butylcaprolactam und 13 g (0,1 Mol der Struktureinheit) Neopentylglykolpolycarbonat vom Molekulargewicht 13 700 werden auf 150 °C erhitzt, bis eine klare Schmelze gebildet ist. Man setzt 5 mg Natrium, gelöst in einer Teilmenge des Caprolactams, zu und hält unter Stickstoff bei 160 °C, bis keine weitere Zunahme an Viskosität mehr zu beobachten ist. Man erhält ein farbloses, transparentes und plastisches Reaktionsprodukt vom Molekulargewicht 11 800.

Beispiel 5

22,6 g (0,2 Mol) Caprolactam und 13 g (0,1 Mol) Neopentylglykolpolycarbonat vom Molekulargewicht 17 900 werden aufgeschmolzen und bei 150 °C homogenisiert. Man gibt 10 mg Natrium, gelöst in 2 g des einzusetzenden Caprolactams, zu und erhitzt unter Stickstoff auf 160 °C bis keine weitere Zunahme an Viskosität mehr zu beobachten ist. Man erhält ein bei Raumtemperatur farbloses, transparentes, plastisches Reaktionsprodukt von großer Klebkraft. Es löst sich in Methylenchlorid und Methanol und quillt in Aceton, Essigester und Toluol. Das Molekulargewicht beträgt 21 000.

**Ansprüche**

1. Anionische Copolymerisate mit Urethan- und Carbonsäureestergruppen aus Lactamen und aliphatischen Polycarbonaten mit Molekulargewichten zwischen 1 000 und 500 000.

2. Anionische Copolymerisate nach Anspruch 1, die zusätzlich Carbonat- oder Carbonamidgruppen aufweisen.

3. Anionische Copolymerisate nach Anspruch 1 mit wiederkehrenden Struktureinheiten der Formel

$$[NH—CO—O—Y—O—CO—(CR_2)_n]$$

worin

R Wasserstoff oder $C_1$-$C_4$-Alkyl

n eine ganze Zahl von 2 bis 13 und

Y den Rest eines Alkohols der Formel HO—X—OH, eines Polyethylenglykols mit einem Molekulargewicht bis zu 10 000 oder eines Oxalkylierungssproduktes von bifunktionellen Phenolen

X einen gegebenenfalls durch $C_1$-$C_4$-Alkyl substituierten, gegebenenfalls durch ein bis drei Sauerstoffatome unterbrochenen, offenkettigen cyclischen oder gemischt offenkettig-cyclischen Alkylenrest mit 2 bis 12 Kohlenstoffatomen bedeuten.

4. Anionische Copolymerisate nach Anspruch 1 mit Molekulargewichten zwischen 1 000 und 150 000, vorzugsweise zwischen 1 000 und 50 000.

5. Verfahren zur Herstellung von Produkten gemäß Anspruch 1, dadurch gekennzeichnet, daß man wasserfreie Gemische, gegebenenfalls in einem aprotischen Lösungsmittel, aus Lactamen und aliphatischen Polycarbonaten in Gegenwart alkalischer Katalysatoren bei 100 bis 250 °C erhitzt.

6. Verfahren nach Anspruch 5, dadurch gekennzeichnet, daß man Lactame der Formel

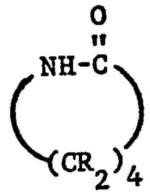

worin R und n die in Anspruch 3 genannte Bedeutung haben, mit Polycarbonaten, die aus Alkoholen der Formel

HO—X—OH,

worin X die in Anspruch 3 genannte Bedeutung hat, aus Polyethylenglykolen mit einem Molekulargewicht bis zu 10 000 oder aus Oxalkylierungsprodukten von bifunktionellen Phenolen erhalten werden, umsetzt.

7. Verfahren nach Anspruch 5, dadurch gekennzeichnet, daß man als Katalysatoren Alkaliverbindungen in Mengen von 0,001 bis 1 Gewichtsprozent, bezogen auf die Menge der Reaktionspartner, einsetzt.

8. Verfahren nach Anspruch 5, dadurch gekennzeichnet, daß man Lactame und Polycarbonate im Verhältnis 10 : 90 bis 90 : 10 Gewichtsprozent, vorzugsweise 20 : 80 bis 80 : 20 Gewichtsprozent, einsetzt.

9. Verwendung der anionischen Polymerisate nach Anspruch 1 als Kunststoffe, Klebstoffe, Weichmachern und Lacke.

**Claims**

1. Anionic copolymers which contain urethane and carboxylic acid ester groups and are obtained from lactams and aliphatic polycarbonates having molecular weights of between 1,000 and 500,000.

2. Anionic copolymers according to Claim 1 which additionally contain carbonate or carbonamide groups.

3. Anionic copolymers according to Claim 1 containing recurring structural units of the formula

$$[NH—CO—O—Y—O—CO—(CR_2)_n]$$

wherein

R denotes hydrogen or $C_1$-$C_4$-alkyl,

n denotes an integer from 2 to 13 and

Y denotes the radical of an alcohol of the formula HO—X—OH, of a polyethylene glycol having a molecular weight of up to 10,000 or of an alkoxylation product of bifunctional phenols, and

X denotes an open-chain, cyclic or mixed open-chain/cyclic alkylene radical which has 2 to 12 carbon atoms and is optionally substituted by $C_1$-$C_4$-alkyl and is optionally interrupted by one to three oxygen atoms.

4. Anionic copolymers according to Claim 1 having molecular weights of between 1,000 and 150,000, preferably of between 1,000 and 50,000.

5. Process for the production of products according to Claim 1, characterised in that anhydrous mixtures, optionally in an aprotic solvent, of lactams and aliphatic polycarbonates are heated at 100 to 250 °C in the presence of alkaline catalysts.

6. Process according to Claim 5, characterised in that lactams of the formula

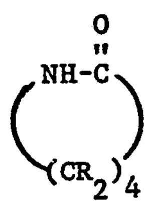

wherein R and n have the meaning mentioned in Claim 3, are reacted with polycarbonates which are obtained from alcohols of the formula

HO—X—OH,

wherein X has the meaning mentioned in Claim 3, from polyethylene glycols having a molecular weight of up to 10,000 or from alkoxylation products of bifunctional phenols.

7. Process according to Claim 5, characterised in that alkali compounds are used as catalysts in amounts of 0,001 to 1 percent by weight, based on the quantity of the reactants.

8. Process according to Claim 5, characterised in that lactams and polycarbonates are used in a ratio of 10 : 90 to 90 : 10 percent by weight, preferably 20 : 80 to 80 : 20 percent by weight.

9. Use of the anionic polymers according to Claim 1 as plastics, adhesives, plasticisers and lacquers.

**Revendications**

1. Copolymères anioniques, à groupes uréthanne et à groupes ester carboxylique, de lactames et de polycarbonates aliphatiques, ayant des poids moléculaires entre 1 000 et 500 000.

2. Copolymères anioniques selon la revendication 1, qui présentent en outre des groupes carbonate ou des groupes carboxamide.

3. Copolymères anioniques selon la revendication 1, ayant des motifs de structure récurrents de formule

$$[NH—CO—O—Y—O—CO—(CR_2)_n]$$

dans laquelle

R représente l'hydrogène ou un alkyle en $C_1$-$C_4$,

n est un nombre entier de 2 à 13 et

Y est le reste d'un alcool de formule HO—X—OH, d'un polyéthylèneglycol d'un poids moléculaire jusqu'à 10 000 ou d'un produit d'oxalkylation de phénols bifonctionnels et

X représente un reste alkylène ayant 2 à 12 atomes de carbone à chaîne ouverte, cyclique ou mixte ouverte-cyclique, éventuellement interrompu par 1 à 3 atomes d'oxygène, éventuellement substitué par alkyle en $C_1$-$C_4$.

4. Copolymères anioniques selon la revendication 1 ayant des poids moléculaires entre 1 000 et 150 000, de préférence entre 1 000 et 50 000.

5. Procédé pour la fabrication de produits selon la revendication 1, caractérisé en ce que l'on chauffe des mélanges anhydres de lactames et de polycarbonates aliphatiques, éventuellement dans un solvant aprotique, à 100-250 °C, en présence de catalyseurs alcalins.

6. Procédé selon la revendication 5, caractérisé en ce que l'on fait réagir des lactames de formule

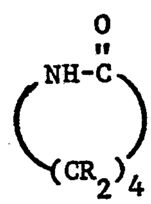

dans laquelle R et n ont la signification indiquée à la revendication 3, avec des polycarbonates qui sont obtenus à partir d'alcools de formule

$$HO—X—OH$$

dans laquelle X a la signification indiquée à la revendication 3, à partir de polyéthylèneglycols d'un poids moléculaire jusqu'à 10 000 ou de produits d'oxalkylation de phénols bifonctionnels.

7. Procédé selon la revendication 5, caractérisé en ce que l'on utilise comme catalyseurs des composés alcalins en quantités de 0,001 à 1 % en poids par rapport à la quantité des partenaires de réaction.

8. Procédé selon la revendication 1, caractérisé en ce que l'on utilise les lactames et les polycarbonates dans un rapport de 10 : 90 à 90 : 10 % en poids, de préférence de 20 : 80 à 80 : 20 % en poids.

9. Utilisation des polymères anioniques selon la revendication 1, comme matières plastiques, colles, plastifiants, laques et vernis.